# EUROPEAN PATENT APPLICATION

(11) **EP 3 826 427 A1**
(43) Date of publication of application: **26.05.2021**
(21) Application number: 20206103.2
(22) Date of filing: 06.11.2020
(51) Int. Cl.: H05B 3/00, B29C 64/268

(54) **HEATER FOR THEROMOPLASTIC FILAMENT AND WORKPIECE**

(30) Priority: 21.11.2019 US 201916690795
(71) Applicant: Arevo, Inc., Milpitas, California 95025 (US)
(72) Inventor: TREYGER, Leonid Michael, Orlando, Florida (US); AUGUST, Zachary Aaron, Santa Clara, CA California (US); BHEDA, Hemant, Saratoga, CA California (US)
(74) Representative: Blumbach · Zinngrebe Patentanwälte PartG mbB

(57) **Abstract**

A pair of physically-integrated two-stage heaters are disclosed for precisely heating a thermoplastic filament and a thermoplastic workpiece in preparation for depositing the filament onto the workpiece. The design in physically compact and capable of heating the filament and workpiece to within a very narrow temperature range. This is accomplished with four independently-generated light beams, of different frequencies, that are spatially combined and transmitted, via optical fiber or free-space optics, to the location where they are needed and where they are unpacked (i.e., spatially separated) and shone onto their respective targets.

## Description

### Field of the Invention

The present invention relates to additive manufacturing in general, and, more particularly, to additive manufacturing processes that use segments of thermoplastic filament as their elemental unit of fabrication.

### Background of the Invention

In the same way that a building can be constructed by successively depositing bricks on top of one another, it is well known in the field of additive manufacturing that an article of manufacture can be fabricated by successively depositing segments of thermoplastic filament on top of one another. When the temperature of a thermoplastic filament is below its glass-transition Tg, the filament is long, thin, stiff and not tacky - like a dry spaghetti. In contrast, when the temperature of the filament is above its glass-transition temperature Tg but below its melting point, the filament is long, thin, flexible, and sticky - like a wet spaghetti.

Masonry bricks are not, in and of themselves, adhesive, and, therefore an adhesive compound - typically morter - is used to bind them together. In contrast, thermoplastic filaments can, in and of themselves, permanently be bound together. For example, if two filaments are heated above their glass-transition temperature Tg, then placed in contact and tamped or pressed into place (to ensure good contact and entangling of their respective polymer strands), and allowed to cool, then those filaments will be bound together.

In the field of additive manufacturing, the process of successively depositing a segment of thermoplastic filament onto a workpiece - with itself comprises previously deposited segments of thermoplastic filament presents many challenges. For example, if the temperature to which the filament or workpiece is heated is too low in some places, then the workpiece is weakened. In contrast, if the temperature to which the filament or workpiece is heated is too high in some places, then the workpiece could partially melt and result in a misshapen workpiece. Therefore, the need exists for an improved heater for heating thermoplastic filament and a thermoplastic workpiece in preparation for depositing the filament onto the workpiece.

### Summary of the Invention

Some embodiments of the present invention are capable of heating a thermoplastic filament and a thermoplastic workpiece without some of the costs and disadvantages for doing so in the prior art. For example, the illustrative embodiment of the present invention comprise a two-stage filament heater for heating the filament and a two-stage workpiece heater for heating the workpiece. These heaters partition the task of heating into two stages: a first slow "gross" heating and a second quick "fine" heating to ensure that the temperatures of the filament and the workpiece are within the desired temperature range.

The two-stage filament heater comprises two independently-controlled light beams of different wavelength. One light beam heats one portion of the filament, and the second light beam heats a second portion of the filament. Each light beam is generated by a different laser, and the power of each laser beam is controlled with a feed-back loop to ensure that it properly heats the filament.

The two-stage workpiece heater operates in a similar fashion. The workpiece heater comprises two independently-controlled light beams of different wavelengths from each other and from those used to heat the filament. One light beam heats a portion of the workpiece, and the second light beam heats a second portion of the workpiece. Each light beam is generated by a different laser, and the power of each laser beam is controlled with a feed-back loop to ensure that it properly heats the workpiece.

The four light beams are combined with light combiners to generate one collinear superimposed beam that comprises all four light beams. This spatially-combined beam is conveyed to the location, via optical fiber, where the filament is deposited and tamped. A set of beam splitters then unpacks the individual light beams and directs them onto their targets.

The illustrative embodiment comprises: a length of a filament that is heated by a first light beam at a first time t₁, wherein the filament comprises a fiber-reinforced thermoplastic material, and wherein the first light beam is characterized by a first wavelength λ₁; an area on a workpiece that is heated by a second light beam at a second time t₂, wherein the second light beam is characterized by a second wavelength λ₂, and wherein λ₁ ≠ λ₂; a tamping tool for tamping the length of the filament onto the area of the workpiece at a tamping time t_{τ}, wherein t_{τ} is after t₁ and t_{τ} is after t₂; and a first optical beam splitter for receiving a spatial combination of the first light beam and the second light beam and for spatially separating the first light beam and the second light beam.

### Brief Description of the Drawings

**Figure 1** depicts a front orthographic illustration of the salient components of additive manufacturing system 100 in accordance with the illustrative embodiment of the present invention.
**Figure 2** depicts an enlarged orthographic side view of workpiece 106, filament 111, tamping tool 108, and deposition heater 113, arranged as shown.
**Figure 3** depicts an illustrative graph that depicts the power of light beams 201-A, 201-B, 201-C, and 201-D varying as a function of time.
**Figure 4** depicts a schematic illustration of the architecture of deposition heater 113 in accordance with the illustrative embodiment of the present invention.
**Figure 5** depicts a first alternative architecture of deposition heater 113 in which the individual light beams are separated in a different order.
**Figure 6** depicts a second alternative architecture of deposition heater 113 in which the individual light beams are separated in yet another different order.
**Figure 7** depicts an enlarged orthographic side view of workpiece 106, filament 111, tamping tool 108, and beam splitters 415, 416, and 417.

### Detailed Description

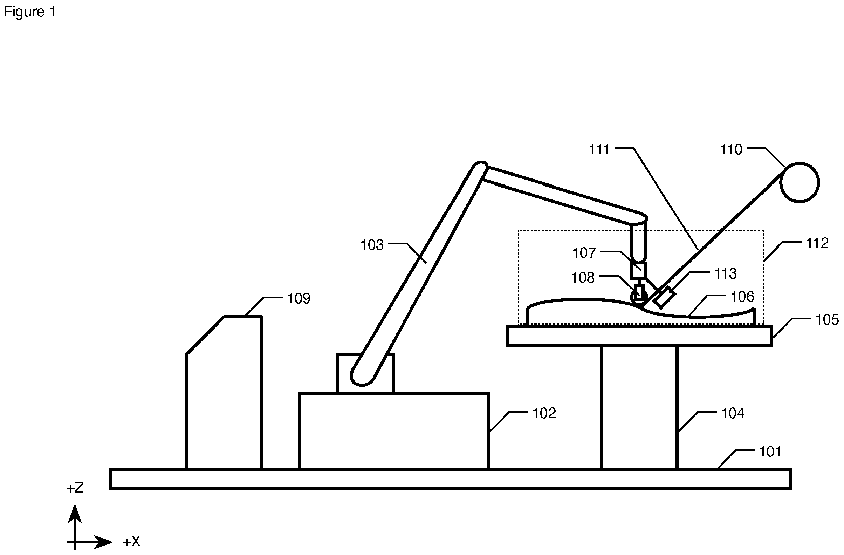

**Figure 1** depicts a front orthographic illustration of the salient components of additive manufacturing system 100 in accordance with the illustrative embodiment of the present invention. Additive manufacturing system 100 comprises: platform 101, robot mount 102, robot arm 103, build plate support 104, build plate 105, workpiece 106, deposition head 107, tamping tool 108, controller 109, filament reel 110, filament 111, and build volume 112. The purpose of manufacturing system 100 is to fabricate an article of manufacture by successively depositing finite lengths of filament on top of each other.

Platform 101 is a rigid structure that ensures that the relative spatial relationship of robot mount 102, robot arm 103, deposition head 107, and tamping tool 108 are maintained and known with respect to build-plate support 104, build plate 105, and workpiece 106. It will be clear to those skilled in the art how to make and use platform 101.

Robot mount 102 is a rigid and stable support for robot arm 103. It will be clear to those skilled in the art how to make and use robot mount 102.

Robot arm 103 comprises a six-axis mechanical arm that is under the control of controller 109. A non-limiting example of robot arm 103 is the IRB 4600 robot offered by ABB. Robot arm 103 is capable of depositing a segment of fiber-reinforced thermoplastic filament from any three-dimensional coordinate in build volume 112 to any other three-dimensional coordinate in build volume 112 with deposition head 122 at any approach angle. Robot arm 103 can move tamping tool 108 in:
i. the +X direction,
ii. the -X direction,
iii. the +Y direction,
iv. the -Y direction,
v. the +Z direction,
vi. the -Z direction, and
vii. any combination of i, ii, iii, iv, v, and vi,
   while rotating the approach angle of tamping tool 108 around any line, any planar curve, and any non-planar curve within build volume 112. It will be clear to those skilled in the art how to make and use robot arm 103.

Build plate support 104 is a rigid and stable support for build plate 105 and workpiece 106. Build plate support 104 comprises a stepper motor - under the control of controller 109 - that is capable of rotating build plate 105 (and, consequently workpiece 106) around an axis that is normal to the X-Y plane. It will be clear to those skilled in the art how to make and use build plate support 104.

Build plate 105 is a rigid support onto which workpiece 106 is rigidly affixed so that it cannot move or rotate independently of build plate 105. It will be clear to those skilled in the art how to make and use build plate 105.

Workpiece 106 comprises a plurality of finite lengths of filament that have been deposited and successively tamped.

Deposition head 107 comprises all of the hardware and sensors necessary to deposit filament 111 onto workpiece 106 and to ensure that filament 111 is placed in the correct position and adheres to workpiece 106. Deposition head 107 is described in detail below and in the accompanying figures, and ancillary details about deposition head 107 are described in:
(i) United States Patent 10,195,786, entitled "Filament Heating in 3D Printing Systems," issued on February 5, 2019 (attorney docket 3019-115us1); and
(ii) United States Patent 10,046,511, entitled "Alleviating Torsional Forces on Fiber-Reinforced Thermoplastic Filament," issued on August 14, 2018 (attorney docket 3019-143us1); and
(iii) United States Patent 10,076,870, entitled "Filament Guide," issued on September, 18, 2018 (attorney docket 3019-142us1); and
(iv) pending United States patent application Serial No. 15/854,676, entitled "Depositing Arced Portions of Fiber-Reinforced Thermoplastic Filament," filed 12/26/2017 (attorney docket 3019-157us1); and
(v) pending United States patent application Serial No 16/505,541, filed on 7/8/2019 and entitled "Adding a Segment of Fiber-Reinforced Thermoplastic Filament in a Curve" (attorney docket 3019-201us1);
   all of which are incorporated by reference. It will be clear to those skilled in the art, after reading this disclosure and the incorporated documents, how to make and use alternative embodiments of the present invention that use a combination deposition head/tamping wheel.

In accordance with the illustrative embodiment, deposition heater 113 comprises deposition heater 113, which optically heats filament 111 (before deposition and tamping) and workpiece 106 (before deposition and tamping) so as to facilitate the adhesion of filament 111 and workpiece 106. Deposition heater 113 is described in detail below and in the accompanying figures.

Controller 109 comprises the hardware and software necessary to direct build volume 112, robot arm 103, deposition head 122, and build plate support 104, in order to fabricate article of manufacture 151. It will be clear to those skilled in the art how to make and use controller 109.

Filament reel 110 is a circular reel that stores 1000 meters of filament 111 and feeds that filament to deposition head 107. It will be clear to those skilled in the art how to make and use filament reel 110.

Filament 111 comprises a tow of reinforcing fibers that is substantially parallel to its longitudinal axis. In accordance with the illustrative embodiments, filament 111 comprises a cylindrical towpreg of contiguous 12K carbon fiber that is impregnated with thermoplastic resin. The cross-section of filament 111 is circular and has a diameter of 200 µm.

In accordance with the illustrative embodiment, filament 111 comprises contiguous carbon fiber, but it will be clear to those skilled in the art, after reading this disclosure, how to make and use alternative embodiments of the present invention in which filament 111 has a different fiber composition.

It will be clear to those skilled in the art, after reading this disclosure, how to make and use alternative embodiments of the present invention in which filament 111 comprises a different number of fibers (e.g., 1K, 3K, 6K, 24K, etc.). It will be clear to those skilled in the art, after reading this disclosure, how to make and use alternative embodiments of the present invention in which the fibers in filament 111 are made of a different material (e.g., fiberglass, aramid, carbon nanotubes, etc.).

In accordance with the illustrative embodiments, the thermoplastic is, in general, a semi-crystalline polymer and, in particular, the polyaryletherketone (PAEK) known as polyetherketone (PEK). In accordance with some alternative embodiments of the present invention, the semi-crystalline material is the polyaryletherketone (PAEK), polyetheretherketone (PEEK), polyetherketoneketone (PEKK), polyetheretherketoneketone (PEEKK), or polyetherketoneetherketoneketone (PEKEKK). As those who are skilled in the art will appreciate after reading this specification, the disclosed annealing process, as it pertains to a semi-crystalline polymer in general, takes place at a temperature that is above the glass transition temperature Tg.

In accordance with some alternative embodiments of the present invention, the semi-crystalline polymer is not a polyaryletherketone (PAEK) but another semi-crystalline thermoplastic (e.g., polyamide (PA), polybutylene terephthalate (PBT), poly(p-phenylene sulfide) (PPS), etc.) or a mixture of a semi-crystalline polymer and an amorphous polymer.

When the filament comprises a blend of an amorphous polymer with a semi-crystalline polymer, the semi-crystalline polymer can one of the aforementioned materials and the amorphous polymer can be a polyarylsulfone, such as polysulfone (PSU), polyethersulfone (PESU), polyphenylsulfone (PPSU), polyethersulfone (PES), or polyetherimide (PEI). In some additional embodiments, the amorphous polymer can be, for example and without limitation, polyphenylene oxides (PPOs), acrylonitrile butadiene styrene (ABS), methyl methacrylate acrylonitrile butadiene styrene copolymer (ABSi), polystyrene (PS), or polycarbonate (PC). As those who are skilled in the art will appreciate after reading this specification, the disclosed annealing process, as it pertains to a blend of an amorphous polymer with a semi-crystalline polymer, takes place generally at a lower temperature than a semi-crystalline polymer with the same glass transition temperature; in some cases, the annealing process can take place at a temperature slightly below the glass transition temperature.

When the filament comprises a blend of an amorphous polymer with a semi-crystalline polymer, the weight ratio of semi-crystalline material to amorphous material can be in the range of about 50:50 to about 95:05, inclusive, or about 50:50 to about 90:10, inclusive. Preferably, the weight ratio of semi-crystalline material to amorphous material in the blend is between 60:40 and 80:20, inclusive. The ratio selected for any particular application may vary primarily as a function of the materials used and the properties desired for the printed article.

In some alternative embodiment of the present invention, the filament comprises a metal. For example, and without limitation, the filament can be a wire comprising stainless steel, Inconel (nickel/chrome), titanium, aluminum, cobalt chrome, copper, bronze, iron, precious metals (*e.g.,* platinum, gold, silver, *etc*.).

Build volume 112 is the region in three-dimensional space in which robot arm 103 is capable of depositing and tamping filament 111. Workpiece 106 exists completely within build volume 112.

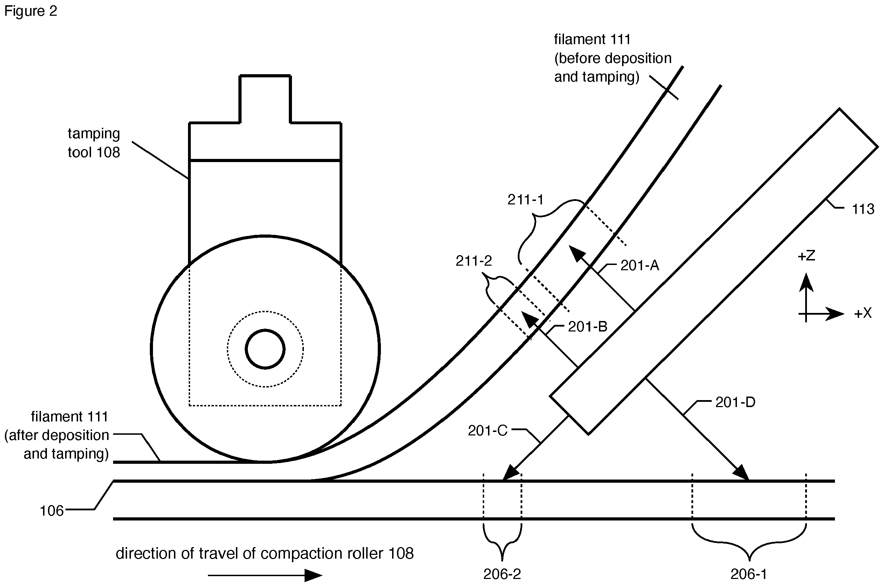

**Figure 2** depicts an enlarged orthographic side view of workpiece 106, filament 111, tamping tool 108, and deposition heater 113, arranged as shown. The cohesion of filament 111 and workpiece 106 requires that both are slightly above their glass-transition temperature Tg at the instant that filament 111 is deposited and tamped onto workpiece 106 but also requires that they cool below Tg as quickly thereafter as possible. As a practical matter, this is difficult for at least two reasons.

First, the acceptable temperature range to which filament 111 and workpiece 106 must be heated is very narrow. If the temperature is too low, the result is insufficient cohesion. If the temperature is too high, filament 111 and workpiece 106 might melt or combust. One possible solution is to enclose build volume 112 into a heated build box, but that would inhibit the requisite cooling after deposition and tamping.

Second, the rate at which filament 111 is deposited and tamped is not constant. On the contrary, the rate at which filament 111 is deposited and tamped varies wildly as robot arm 103 accelerates, moves, decelerates, stops, and changes direction.

To overcome these difficulties, deposition head 107 incorporates deposition heater 113. In accordance with the illustrative embodiment, deposition heater 113 comprises:
(1) a two-stage filament heater for heating each length of filament 111 immediately before it is deposited and tamped, and
(2) a two-stage workpiece heater for heating each area of workpiece 106 immediately before a length of filament 111 is deposited and tamped onto it.
   The filament heater will be described first and then the workpiece heater will be described.

The first stage of the filament heater performs a slow, "gross" heating of each length of filament 111 to within a few percent of the final desired temperature (while considering the amount cooling that will occur in the short interval before it is deposited and tamped), and the second stage of the filament heater performs a quick, "fine" heating of each length of filament 111 to ensure that the temperature of the length is within the desire temperature range at the instant of deposition and tamping. The relative advantages and disadvantages of this two-stage architecture - in comparison to a single-stage filament heater - will be clear to those skilled in the art after reading this specification.

Although deposition heater 113 comprises a two-stage filament heater, it will be clear to those skilled in the art, after reading this disclosure, how to make and use alternative embodiments of the present invention that comprise a single-stage filament heater. Furthermore, it will be clear to those skilled in the art, after reading this disclosure, how to make and use alternative embodiments of the present invention that comprise a multi-stage (e.g., three-stage, four-stage, five-stage, *etc*.) filament heater.

In accordance with the illustrative embodiment, the filament heater comprises two beams of light - light beam 201-A and light beam 201-B. In particular:
(1) the first stage uses light beam 201-A to heat the individual lengths of filament 111 while they are within region of space 211-1, and
(2) the second stage uses light beam 201-B to heat the individual lengths of filament 111 while they are within region of space 211-2. In accordance with the illustrative embodiment, region of space 211-1 and region of space 211-2 are disjoint, but it will be clear to those skilled in the art, after reading this disclosure, how to make and use alternative embodiments of the present invention in which the regions of space partially overlap.

In accordance with the illustrative embodiment:
(1) light beam 201-A is a characterized by a wavelength λA and power PA(t) at time t, and
(2) light beam 201-B is a characterized by a wavelength λB and power PB(t) at time t.
   In accordance with the illustrative embodiment, the wavelengths λA and λB are selected so that at least 95% of the power in light beam 201-A is distinguishable and separable by a dichroic beam splitter from the power in light beam 201-B. It will be clear to those skilled in the art, after reading this disclosure, how to choose wavelengths λA and λB.

In accordance with the illustrative embodiment, the power PA(t) of light beam 201-A is substantially independent of the rate at which filament 111 is deposited and tamped. In contrast, the power PB(t) of light beam 201-B varies mostly in response to the rate at which filament 111 is deposited and tamped. It is essential, however, that PA(t) be independent of PB(t) to account for their different functions.

In accordance with the illustrative embodiment, light beam 201-A is generated by a laser (not shown in Figure 2), in well-known fashion, that is capable of quickly modulating the power PA(t) under the direction of controller 109 and sensors (not shown in Figure 2) that measure the temperature of filament 111 in regions of space 211-1 and 211-2.

In accordance with the illustrative embodiment, light beam 201-B is generated by a laser (not shown in Figure 2), in well-known fashion, that is capable of quickly modulating the power PB(t) under the direction of controller 109 and sensors (not shown in Figure 2) that measure the temperature of filament 111 in regions of space 211-1 and 211-2.

With regard to the workpiece heater, the first stage performs a slow, "gross" heating of each area of workpiece 106 to within a few percent of the final desired temperature (while considering the amount cooling that will occur in the short interval before the corresponding length of filament 111 is deposited and tamped), and the second stage of the workpiece heater performs a quick, "fine" heating of each area of workpiece 106 to ensure that the temperature of the length is within the desire temperature range at the instant of deposition and tamping. The relative advantages and disadvantages of this two-stage architecture - in comparison to a single-stage workpiece heater - will be clear to those skilled in the art after reading this specification.

Although deposition heater 113 comprises a two-stage workpiece heater, it will be clear to those skilled in the art, after reading this disclosure, how to make and use alternative embodiments of the present invention that comprise a single-stage workpiece heater. Furthermore, it will be clear to those skilled in the art, after reading this disclosure, how to make and use alternative embodiments of the present invention that comprise a multi-stage (e.g., three-stage, four-stage, five-stage, *etc*.) workpiece heater.

In accordance with the illustrative embodiment, the workpiece heater comprises two beams of light - light beam 201-D and light beam 201-C. In particular:
(1) the first stage uses light beam 201-D to heat the individual areas of workpiece 106 while they are within region of space 206-1, and
(2) the second stage uses light beam 201-C to heat the individual areas of workpiece 106 while they are within region of space 206-2.
   In accordance with the illustrative embodiment, region of space 206-1 and region of space 206-2 are disjoint, but it will be clear to those skilled in the art, after reading this disclosure, how to make and use alternative embodiments of the present invention in which the regions of space partially overlap.

In accordance with the illustrative embodiment:
(1) light beam 201-D is a characterized by a wavelength λD and power PD(t) at time t, and
(2) light beam 201-C is a characterized by a wavelength λC and power PC(t) at time t.
   In accordance with the illustrative embodiment, the wavelengths λD and λC are selected so that at least 95% of the power in light beam 201-D is distinguishable and separable by a dichroic beam splitter from the power in light beam 201-C. It will be clear to those skilled in the art, after reading this disclosure, how to choose wavelengths λD and λC.

In accordance with the illustrative embodiment, the power PD(t) of light beam 201-D is substantially independent of the rate at which filament 111 is deposited and tamped. In contrast, the power PC(t) of light beam 201-C varies mostly in response to the rate at which filament 111 is deposited and tamped. It is essential, however, that PD(t) be independent of PC(t) to account for their different functions.

In accordance with the illustrative embodiment, light beam 201-D is generated by a laser (not shown in Figure 2), in well-known fashion, that is capable of quickly modulating the power PD(t) under the direction of controller 109 and sensors (not shown in Figure 2) that measure the temperature of filament 111 in regions of space 206-1 and 206-2.

In accordance with the illustrative embodiment, light beam 201-C is generated by a laser (not shown in Figure 2), in well-known fashion, that is capable of quickly modulating the power PC(t) under the direction of controller 109 and sensors (not shown in Figure 2) that measure the temperature of filament 111 in regions of space 206-1 and 206-2.

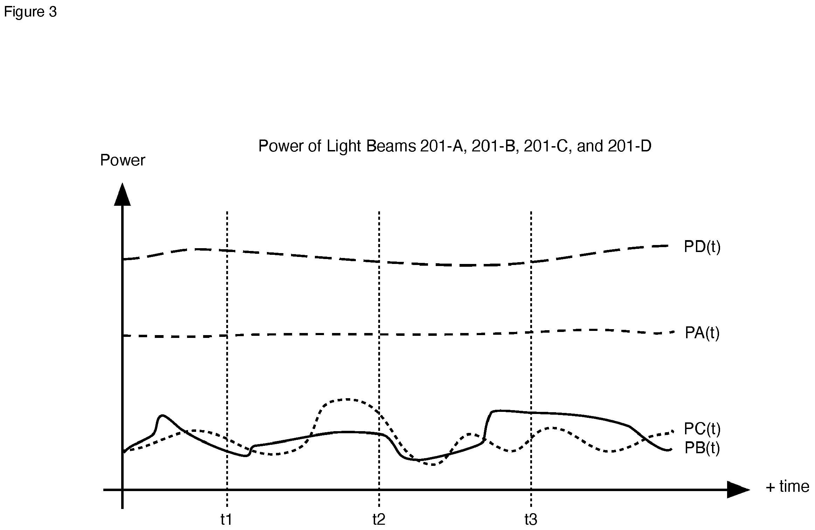

**Figure 3** depicts an illustrative graph that depicts the power of light beams 201-A, 201-B, 201-C, and 201-D varying as a function of time.

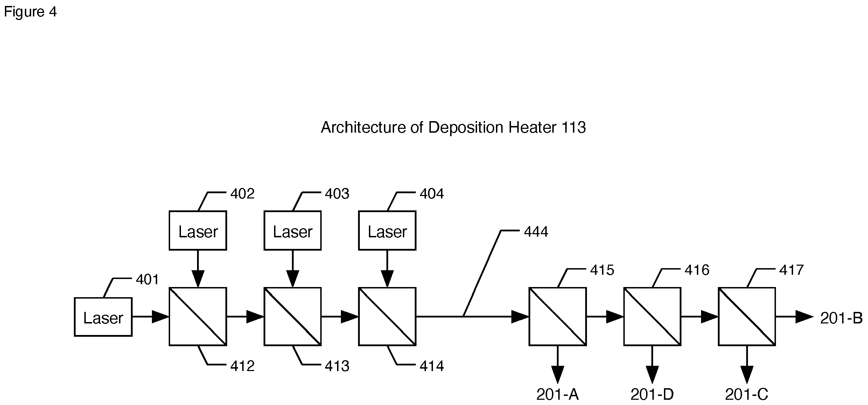

**Figure 4** depicts a schematic illustration of the architecture of deposition heater 113 in accordance with the illustrative embodiment of the present invention. Deposition heater 113 comprises lasers 401 through 404, beam combiners 412, 413, and 414, and beam splitters 415, 416, and 417, functionally interrelated as shown.

Laser 401 is a variable-power laser that generates light beam 201-A with power PA(t) under the control of controller 103. The output of laser 401 is input to beam combiner 412 via free space optics. It will be clear to those skilled in the art how to make and use laser 401.

Laser 402 is a variable-power laser that generates light beam 201-B with power PB(t) under the control of controller 103. The output of laser 402 is input to beam combiner 412 via free-space optics. It will be clear to those skilled in the art how to make and use laser 402.

Laser 403 is a variable-power laser that generates light beam 201-C with power PC(t) under the control of controller 103. The output of laser 403 is input to beam combiner 413 via free-space optics. It will be clear to those skilled in the art how to make and use laser 403.

Laser 404 is a variable-power laser that generates light beam 201-D with power PD(t) under the control of controller 103. The output of laser 404 is input to beam combiner 414 via free-space optics. It will be clear to those skilled in the art how to make and use laser 404.

Beam combiner 412 is a dichroic beam combiner that takes as input the spatially separated light beams 201-A and 201-B and generates a spatial combination of light beams 201-A and 201-B, typically as collinear superimposed beams. The output of beam combiner 412 is input to beam combiner 413 via free-space optics. It will be clear to those skilled in the art how to make and use beam combiner 412.

Beam combiner 413 is a dichroic beam combiner that takes as one input the spatial combination of light beams 201-A and 201-B and as the second input light beam 201-C and generates a spatial combination of light beams 201-A, 201-B, and 201-C. The output of beam combiner 413 is input to beam combiner 414 via free-space optics. It will be clear to those skilled in the art how to make and use beam combiner 413.

Beam combiner 414 is a dichroic beam combiner that takes as one input the spatial combination of light beams 201-A, 201-B, and 201-C and as the second input light beam 201-D and generates a spatial combination of light beams 201-A, 201-B, 201-C, and 201-D. The output of beam combiner 414 is transmitted via optical fiber 444 to beam splitter 415. It will be clear to those skilled in the art how to make and use beam combiner 414.

Beam splitter 415 is a dichroic beam splitter that takes as input the spatial combination of light beams 201-A, 201-B, 201-C, and 201-D and spatially separates light beam 201-A from light beams 201-B, 201-C, and 201-D. From beam splitter 415 light beam 201-A irradiates filament 111 via free-space optics (although various optical components can be included, in well-known fashion, to shape the light beam 201-A). It will be clear to those skilled in the art how to make and use beam splitter 415 and beam-shaping optics.

Beam splitter 416 is a dichroic beam splitter that takes as input the spatial combination of light beams 201-B, 201-C, and 201-D and spatially separates light beam 201-D from light beams 201-B and 201-C. From beam splitter 416 light beam 201-D irradiates workpiece 106 via free-space optics (although various optical components can be included, in well-known fashion, to shape the light beam 201-D). It will be clear to those skilled in the art how to make and use beam splitter 416 and beam-shaping optics.

Beam splitter 417 is a dichroic beam splitter that takes as input the spatial combination of light beams 201-B and 201-C and spatially separates light beam 201-B from light beams 201-C. From beam splitter 417 light beam 201-B irradiates filament 111 via free-space optics (although various optical components can be included, in well-known fashion, to shape the light beam 201-B) and light beam 201-C irradiates workpiece 106 via free-space optics (although various optical components can be included, in well-known fashion, to shape the light beam 201-C). It will be clear to those skilled in the art how to make and use beam splitter 417 and beam-shaping optics.

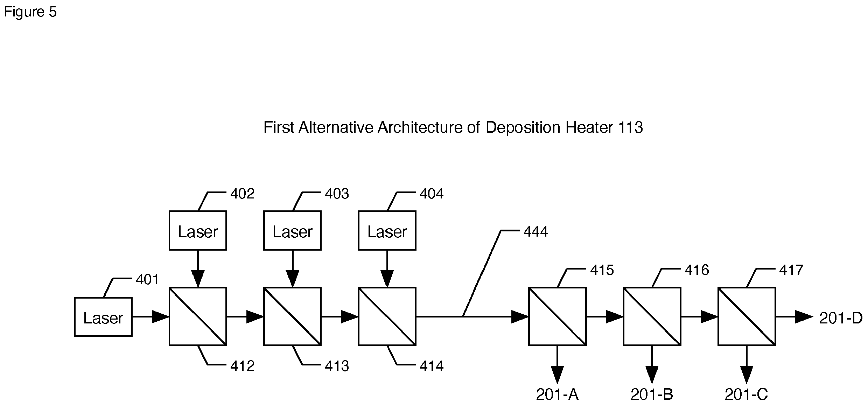

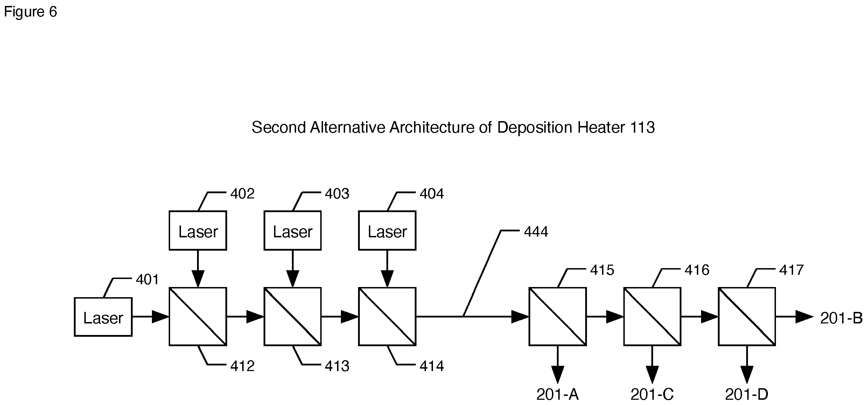

It will be clear to those skilled in the art, after reading this disclosure that order in which the individual light beams are separated from spatial combination of light beams 201-A, 201-B, 201-C, and 201-D can be altered, depending on the circumstances. For example, **Figure 5** depicts a first alternative architecture of deposition heater 113 in which the individual light beams are separated in a different order, and **Figure 6** depicts a second alternative architecture of deposition heater 113 in which the individual light beams are separated in yet another different order.

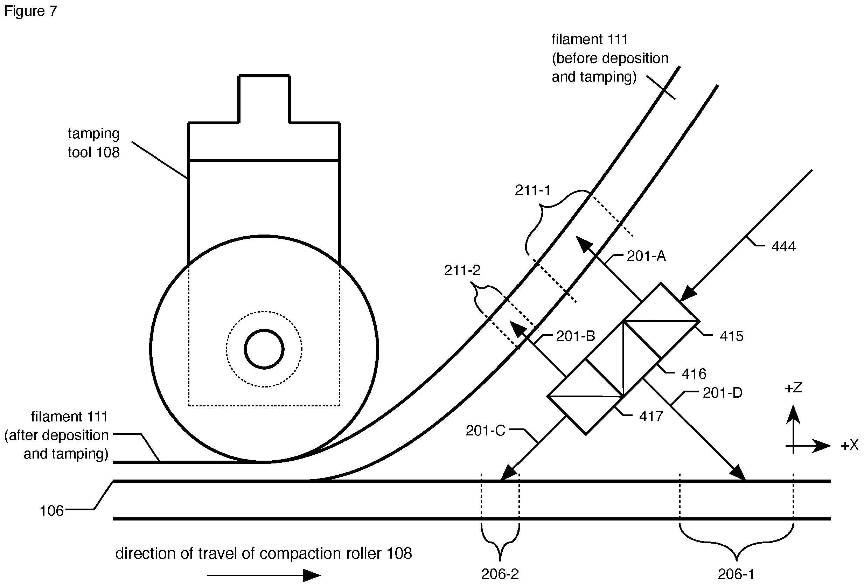

**Figure 7** depicts an enlarged orthographic side view of workpiece 106, filament 111, tamping tool 108, and beam splitters 415, 416, and 417. In Figure 7, the relative locations of beam splitters 415, 416, and 417 are depicted, which enables light beams 201-A, 201-B, 201-C, and 201-D to be located in close proximity to the location at which filament 111 is deposited and tamped onto workpiece 106, while keeping lasers 401, 402, 403, and 404 out of the way of deposition head 107.

## Claims

1. An apparatus comprising:
a length (211-1, 211-2) of a filament (111) that is heated by a first light beam (201-A, 201-B) at a first time t₁, wherein the filament comprises a fiber-reinforced thermoplastic material, and wherein the first light beam is **characterized by** a first wavelength λ₁;
an area (201-C, 201-D) on a workpiece (106) that is heated by a second light beam (201-C, 201-D) at a second time t₂, wherein the second light beam is **characterized by** a second wavelength λ₂, and wherein λ₁ ≠ λ₂;
a tamping tool (108) for tamping the length of the filament onto the area of the workpiece at a tamping time t_{T}, wherein t_{τ} is after t₁ and t_{T} is after t₂.

2. The apparatus of claim 1 further comprising:
an optical beam splitter (415, 416, 417) for receiving a spatial combination of the first light beam and the second light beam and for spatially separating the first light beam from the second light beam.

3. The apparatus of claim 1 or 2 further comprising:
a first laser (401, 402, 403, 404) for generating the first light beam;
a second laser (401, 402, 403, 404) for generating the second light beam; and
a first optical beam combiner (412, 413, 414) for receiving the first light beam and second light beam that is spatially separated from the first light beam and for creating a spatial combination of the first light beam and the second light beam.

4. The apparatus of claim 1 or 2 or 3:
wherein the first light beam is **characterized by** a first power P₁(t₁) at the first time t₁;
wherein the second light beam is **characterized by** a second power P₂(t₂) at the second time t₂; and
wherein P₁(t₁) ≠ P₂(t₂).

5. The apparatus of claim 1 wherein the length of the filament is heated by a third light beam (201-A, 201-B) at a third time t₃, wherein the third light beam is **characterized by** a third wavelength λ₃, wherein t_{T} is after t₃.

6. The apparatus of claim 5 further comprising:
an optical beam splitter (415, 416, 417) for receiving a spatial combination of the first light beam and the third light beam and for spatially separating the first light beam and the third light beam.

7. The apparatus of claim 5 or 6 further comprising:
a first laser (401, 402, 403, 404) for generating the first light beam;
a second laser (401, 402, 403, 404) for generating the second light beam;
a third laser (401, 402, 403, 404) for generating the third light beam; and
an optical beam combiner (412, 413, 414) for receiving the first light beam and third light beam that is spatially separated from the first light beam and for creating a spatial combination of the first light beam and the third light beam.

8. The apparatus of claim 5 or 6 or 7:
wherein the first light beam is **characterized by** a first power P₁(t₁) at the first time t₁;
wherein the second light beam is **characterized by** a second power P₂(t₂) at the second time t₂;
wherein the third light beam is **characterized by** a third power P₃(t₃) at the third time t₃; and
wherein P₁(t₁) ≠ P₂(t₂) ≠ P₃(t₃).

9. The apparatus of claim 1 wherein the area of the filament is workpiece by a third light beam (201-C, 201-D) at a third time t₃, wherein the third light beam is **characterized by** a third wavelength λ₃, wherein t_{T} is after t₃.

10. The apparatus of claim 9 further comprising:
an optical beam splitter (415, 416, 417) for receiving a spatial combination of the first light beam and the third light beam and for spatially separating the first light beam and the third light beam.

11. The apparatus of claim 9 or 10 further comprising:
a first laser (401, 402, 403, 404) for generating the first light beam;
a second laser (401, 402, 403, 404) for generating the second light beam;
a third laser (401, 402, 403, 404) for generating the third light beam; and
an optical beam combiner (412, 413, 414) for receiving the second light beam and third light beam that is spatially separated from the second light beam and for creating a spatial combination of the second light beam and the third light beam.

12. The apparatus of claim 9 or 10 or 11:
wherein the first light beam is **characterized by** a first power P₁(t₁) at the first time t₁;
wherein the second light beam is **characterized by** a second power P₂(t₂) at the second time t₂;
wherein the third light beam is **characterized by** a third power P₃(t₃) at the third time t₃; and
wherein P₁(t₁) ≠ P₂(t₂) ≠ P₃(t₃).
